# EUROPEAN PATENT SPECIFICATION

(11) **EP 2 503 834 B1**
(45) Date of publication and mention of the grant of the patent: **07.12.2016**
(21) Application number: 09851573.7
(22) Date of filing: 24.11.2009
(51) Int. Cl.: H04W 68/04, H04W 60/04

(54) **USER EQUIPMENT PAGING METHOD AND SYSTEM, USER EQUIPMENT AND PAGING NETWORK**
FUNKRUFVERFAHREN UND SYSTEM FÜR EIN BENUTZERGERÄT, BENUTZERGERÄT UND FUNKRUFNETZ
PROCÉDÉ ET SYSTÈME DE RECHERCHE D'ÉQUIPEMENT UTILISATEUR, ÉQUIPEMENT UTILISATEUR ET RÉSEAU DE RADIOMESSAGERIE

(43) Date of publication of application: 26.09.2012
(73) Proprietor: ZTE Corporation, Shenzhen, Guangdong 518057 (CN)
(72) Inventor: DU, Zhongda, Guangdong 518057 (CN); CHEN, Zhongming, Guangdong 518057 (CN); WANG, Xinhui, Guangdong 518057 (CN)
(74) Representative: Wilson Gunn
(86) International application number: PCT/CN2009/075114
(87) International publication number: WO 2011/063560

(56) References cited:
- WO-A1-95/11577
- WO-A1-2007/091865
- WO-A2-2008/112161
- CN-A- 1 503 580
- CN-A- 101 350 935
- CN-A- 101 404 820
- CN-A- 101 543 124
- SAMSUNG: "Idle mode handling for intra and inter system mobility", 3GPP DRAFT; SRJ-060021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Denver; 20070129, 29 January 2007 (2007-01-29), XP050020493, [retrieved on 2007-01-29]

## Description

### TECHNICAL FIELD

The disclosure relates to a technology of narrowing a paging range for a User Equipment (UE), in particular to a user equipment paging method and system for narrowing the paging range for the UE in a flattened architecture, the UE, and a paging network.

### BACKGROUND

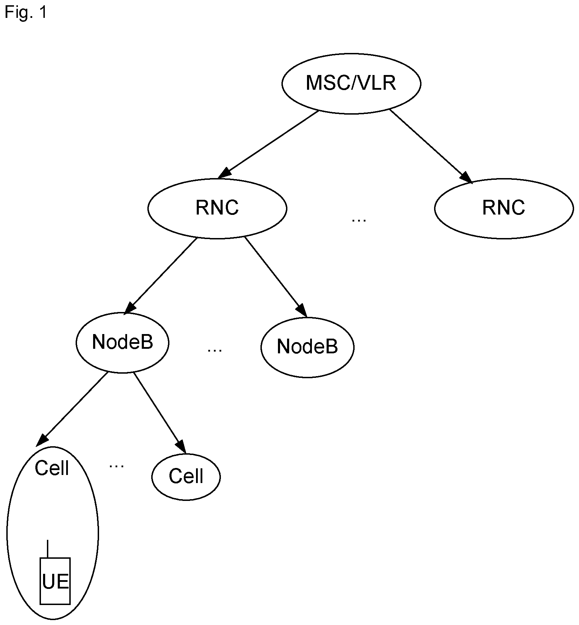

Fig. 1 shows a network structure diagram of a Universal Mobile Telecommunication System (UMTS), as shown in Fig. 1, for convenient paging, operators combine one or more cells to form a Location Area (LA), the LAs are set with different codes to distinguish, these codes for the LAs are called Location Area Codes (LACs), and the combination of an operator identifier and the LAC is unique in the world. The LA is the minimum area for user equipment Non-Access-Stratum (NAS) mobility management; for a Circuit Switch (CS) service, the LAC is provided, while for a Packet Switch (PS) service, a Routing Area Code (RAC) is provided. In the UMTS, one RAC is always within one LAC range, and one cell belongs to only one LA within a certain domain. In a GSM EDGE Radio Access Network (GERAN) system, the partition of the LAs is the same as that in the UMTS.

At present, in the prior art, the paging procedure is realized as follows:
when the UE turns on, or moves in a network and spans over the LAs (that is, moves from one LA to another LA), or initiates a location update to a network side periodically, wherein the location update message sent by the UE contains information of the LA to which the cell where the UE resides currently belongs;
after receiving the location update message of the UE, a Mobile Switching Center (MSC)/ Visitor Location Register (VLR) may then be able to determine and save the LA where the UE resides; and
when the network side needs to establish a connection with the UE, it may include the information of the LA included in the location update initiated by the UE into a paging message and then send the paging message to a Radio Network Controller (RNC) to which the LA belongs, wherein there may be a plurality of RNCs to which the LA belongs. After receiving the paging message, the RNC sends the paging message to all cells in this LA belonging to this RNC.

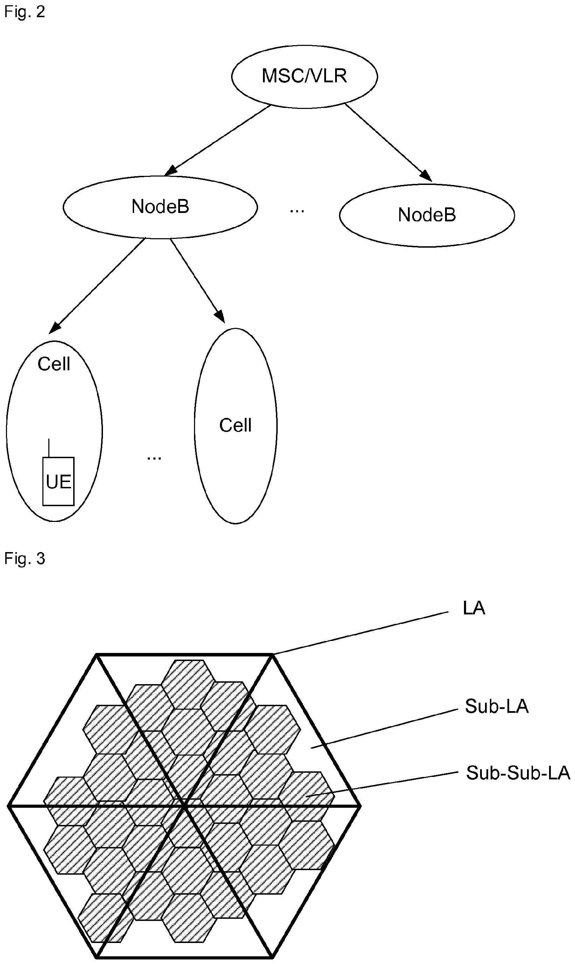

Fig. 2 shows a network structure diagram after network flattening, as shown in Fig. 2, the network flattening is to incorporate functions of a Base Station Controller (BSC)/RNC into a NodeB, in this way, the NodeB is directly connected with a core network. At this time, if the MSC/VLR needs to connect with a certain UE, it needs to directly send the paging message to the NodeBs. As is known to all, the number of the NodeB is far more than that of the RNC, this will cause sharp increase of the number of the paging message between the MSC/VLR and the NodeB, the sharp increase of the number of the paging message will inevitably cause excessively high load of the core network and greatly increase the flow of signaling interaction between the core network and the NodeB. In the UMTS, generally, one RNC is able to manage thousands of NodeBs; it is assumed that one RNC manages five hundred NodeBs, after network flattening, the core network is to be directly connected with the five hundred NodeBs, the primary quantity of the paging message between the core network and the RNC will be amplified by five hundred times, this increase of the quantity of the paging message is quite amazing. At present, how to solve the problem of the sharp increase of the number of the paging message has not been involved in the prior art.

In document WO 95/11577 A1 (NOKIATELECOMMUNICATIONS OY [FI]; KAUPPU HANNA MARIA [FI]) filed on 27 April 1995, it has been disclosed a cellular radio network, subscriber equipment for the cellular radio network and a method for carrying out a location updating in the cellular radio network. In the cellular radio network or at least in part of it, several coincident logical location area levels are provided, these levels being hierarchical with respect to location area size. Location area density is thus different at different location area levels: large location areas are used at some area levels whereas small location areas are in use at others, correspondingly. Users/terminal equipments may either have a relatively fixed allocation to certain location area levels, or the terminal equipment may dynamically select the location area level appropriate at a given moment. For instance, stationary or low-mobility users may use dense location area levels and fast-moving users may use less dense location area levels.

Furthermore, document WO 2007/091865 A1 (SUMSUNG ELECTRONICS CO LTD [KR]) filed on 16 August 2007 has disclosed a method and system for setting a tracking area for an mobile station in a wireless communication system, in which the mobile station estimates its velocity, compares the estimated velocity with at least one velocity threshold, and updates the level of a current tracking area according to the comparison.

### SUMMARY

In view of this, the main purpose of the disclosure is to provide a user equipment paging method and system, a user equipment and a paging network, with the disclosure, information of a location area with a corresponding level can be reported according to a moving state of the user equipment, and an actual location of the user equipment can be determined accurately, so that just a paging message is sent to a network element to which the location where the user equipment resides currently belongs. In order to achieve the purpose, the technical solution of the disclosure is realized as follows.

A user equipment paging method, comprises: setting location areas with different levels and setting corresponding relation between a moving state of a user equipment and the level of the location area by a paging network; further comprises:
reporting information of the location area with the corresponding level to a network side by the user equipment according to the current moving state of the user equipment;
initiating paging for the user equipment by the network side in the location area with the corresponding level reported by the user equipment,
wherein the step of setting location areas with different levels comprises: setting a sub-location area smaller than a coverage area of the location area, and/or setting a sub-sub-location area smaller than a coverage area of a sub-location area, wherein a minimum unit of the location areas with different levels is a cell, and wherein the sub-location area is independent to the location area, and/or the sub-sub-location area is independent to the sub-location area.

Preferably, the method may further comprise: setting a location update triggering condition; when the location update triggering condition is met, reporting the information of the location area with the corresponding level by the user equipment according to the level of the current moving state.

Preferably, the location update triggering condition may comprise: turning on the user equipment, or a preset location update cycle arriving, or spanning over the location area with the level corresponding to the current moving state by the user equipment.

Preferably, the moving state may comprise: a high-speed moving state and a normal-speed moving state; or a high-speed moving state, a medium-speed moving state and a normal-speed moving state;
the step of setting the corresponding relation between the moving state and the level of the location area reported by the user equipment may further comprise:
reporting the location area when the moving state is the high-speed moving state, and reporting the sub-location area when the moving state is the normal-speed moving state;
or, reporting the location area when the moving state is the high-speed moving state, reporting the sub-location area when the moving state is the medium-speed moving state, and reporting the sub-sub-location area when the moving state is the normal-speed moving state;
or, reporting the location area when the moving state is the high-speed moving state or the medium-speed moving state, and reporting the sub-location area when the moving state is the normal-speed moving state;
or, reporting the location area when the moving state is the high-speed moving state, and reporting the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of the UMTS; otherwise, by using Global Positioning System or the frequency of location update of the user equipment.

A user equipment comprises: a setting unit and a reporting unit;
the setting unit is configured to set location areas with different levels, and to set corresponding relation between a moving state of the user equipment and the level of the location area; and
the reporting unit is located in the user equipment and is configured to report information of the location area with the corresponding level to a network side according to the current moving state of the user equipment,
wherein the setting unit is further configured to set a sub-location area smaller than a coverage area of the location area, and/or to set a sub-sub-location area smaller than a coverage area of a sub-location area, wherein a minimum unit of the location areas with different levels is a cell, and wherein the sub-location area is independent to the location area, and/or the sub-sub-location area is independent to the sub-location area.

Preferably, the setting unit may further be configured to set a location update triggering condition; when the location update triggering condition is met, the reporting unit may be configured to report the information of the location area with the corresponding level according to the current moving state of the user equipment.

Preferably, the location update triggering condition may comprise: turning on the user equipment, or a preset location update cycle arriving, or spanning over the location area with the level corresponding to the current moving state by the user equipment.

Preferably, the moving state may comprise: a high-speed moving state and a normal-speed moving state; or a high-speed moving state, a medium-speed moving state and a normal-speed moving state;
the reporting unit may be configured to report the location area when the moving state is the high-speed moving state, and to report the sub-location area when the moving state is the normal-speed moving state;
or, the reporting unit may be configured to report the location area when the moving state is the high-speed moving state, to report the sub-location area when the moving state is the medium-speed moving state, and to report the sub-sub-location area when the moving state is the normal-speed moving state;
or, the reporting unit may be configured to report the location area when the moving state is the high-speed moving state or the medium-speed moving state, and to report sub-location area when the moving state is the normal-speed moving state;
or, the reporting unit may be configured to report the location area when the moving state is the high-speed moving state, and to report the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of the UMTS; otherwise, by using Global Positioning System or the frequency of location update of the user equipment.

A paging network comprises: a setting unit, a receiving unit and a paging unit;
the setting unit is configured to set location areas with different levels, and to set corresponding relation between a moving state of a user equipment and the level of the location area;
the receiving unit is configured to receive information of the location area with the level corresponding to the current moving state of the user equipment, which is reported by the user equipment; and
the paging unit is configured to initiate paging for the user equipment in the location area reported by the user equipment,
wherein the setting unit is further configured to set a sub-location area smaller than a coverage area of the location area, and/or to set a sub-sub-location area smaller than a coverage area of a sub-location area, wherein a minimum unit of the location areas with different levels is a cell, and wherein the sub-location area is independent to the location area, and/or the sub-sub-location area is independent to the sub-location area.

Preferably, the moving state may comprise a high-speed moving state and a normal-speed moving state; or a high-speed moving state, a medium-speed moving state and a normal-speed moving state;
the user equipment may be configured to report the location area when the moving state is the high-speed moving state, and to report the sub-location area when the moving state is the normal-speed moving state;
or, the user equipment may be configured to report the location area when the moving state is the high-speed moving state, to report the sub-location area when the moving state is the medium-speed moving state, and to report the sub-sub-location area when the moving state is the normal-speed moving state;
or, the user equipment may be configured to report the location area when the moving state is the high-speed moving state or the medium-speed moving state, and to report the sub-location area when the moving state is the normal-speed moving state;
or, the user equipment may be configured to report the location area when the moving state is the high-speed moving state, and to report the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of the UMTS; otherwise, by using Global Positioning System or the frequency of location update of the user equipment.

In the disclosure, by setting location areas with different levels and setting the moving state of the user equipment as well as the corresponding relation between the moving state of the user equipment and the level of the location area, the user equipment reports the information of the location area with the corresponding level according to the current moving state of the user equipment, the network side is able to accurately determine the specific location of the user equipment according to the location area; when sending the paging message to the user equipment, the network side just directly sends the paging message to the NodeB to which the location where the user equipment resides currently belongs. The disclosure is able to solve the problem that the load of a core network is too high due to the paging message after the network flattening, greatly reduce paging flow between the core network and the NodeB, narrow the paging range for the user equipment, and decrease the load of the core network.

### BRIEF DESCRIPTION OF THE DRAWINGS

Fig. 1 shows a network structure diagram of a universal mobile telecommunication system;
Fig. 2 shows a network structure diagram after network flattening;
Fig. 3 shows a diagram of four mobile stations multiplexing HR channel resources in a GSM mode;
Fig. 4 shows a structure diagram when a user equipment moves in location areas with different levels in a UMTS;
Fig. 5 shows a diagram when a user equipment moves in location areas with different levels in a GERAN system;
Fig. 6 shows a diagram when a user equipment moves in location areas with different levels in an LTE system;
Fig. 7 shows a structure diagram of a user equipment paging system according to the disclosure;
Fig. 8 shows a structure diagram of a user equipment according to the disclosure; and
Fig. 9 shows a structure diagram of a paging network according to the disclosure.

### DETAILED DESCRIPTION

In order to make the purpose, technical solution and advantages of the disclosure more clear, the disclosure will be further described in details in conjunction with embodiments and with reference to drawings.

In the disclosure, location areas with different levels are set first, and corresponding relation between a moving state of a user equipment and the level of the location area reported by the user equipment is set. For example, an existing location area is divided into a smaller sub-location area and/or a sub-sub-location area, the partition way can be determined according to telephone traffic, or the number of users, or carrier frequency in the location area. In the disclosure, a corresponding level of the location area can also be specifically set according to the size of a coverage area, for example, a first level is set to the existing location area, the coverage area of the location area with a second level is smaller than that of the location area with the first level; according to this principle, the location area with the level required by a system is set in turn. An affiliation may exist between the location area with a superior level and the location area with a subordinate level, or the affiliation may not exist. For example, the sub-location area may be a part of the location area. Or, the coverage area of the sub-location area may not be within the location area, that is, the partition of the partitioned sub-location area and/or sub-sub-location area may not have any relation with the current location area, the sub-location area and/or the sub-sub-location area may have coordinating relation with the current location area. The minimum unit of the location areas with different levels is a cell. The technical solution of the disclosure will be described below by partitioning the location areas into a location area, a sub-location area and/or a sub-sub-location area as an example; it should be understood by those skilled in the art that the number of the levels and the size of the coverage area of the location area can be set according to specific requirements.

In the disclosure, a network side is able to broadcast the location area, the sub-location area and/or the sub-sub-location area to which the cell where the user equipment resides currently belongs to the user equipment through a system message.

In the disclosure, after the level of the location area is set, it is also needed to set a location update policy for the user equipment according to the level of the location area. Specifically, the location update policy is that the user equipment reports information of the current location area, the sub-location area and/or the sub-sub-location area in which the user equipment resides to the network side according to the moving state of the user equipment. In the disclosure, the moving state of the user equipment is divided into two moving states, namely a high-speed moving state and a normal-speed moving state, which correspond to the location area and the sub-location area, respectively. The moving state of the user equipment may also be divided into three moving states, such as a high-speed moving state, a medium-speed moving state and a normal-speed moving state, the level of location area at this time is set to the location area, the sub-location area and the sub-sub-location area, the three moving states of the user equipment, namely the high-speed moving state, the medium-speed moving state and the normal-speed moving state, respectively correspond to the location area, the sub-location area and the sub-sub-location area, respectively. Or, the location area is divided into the location area and the sub-location area, with the normal-speed moving state and the medium-speed moving state corresponding to the sub-location area and the high-speed moving state corresponding to the location area, or, the normal-speed moving state corresponding to the sub-location area, and the medium-speed moving state and the high-speed moving state corresponding to the location area. The specific corresponding relation is shown below in Tables 1-4, but is not limited the corresponding relation. Classification of the moving state is not limited to the above-mentioned two or three kinds, the moving state can be divided into corresponding level according to an actual demand; and classification of the location area is not limited to the above-mentioned two kinds or three kinds, the location area can be divided into the corresponding level according to the actual demand.

**Table 1**

| | |
|---|---|
| Moving state | Location update |
| Normal-speed | Sub-location area |
| High-speed | Location area |

**Table 2**

| | |
|---|---|
| Moving state | Location update |
| Normal-speed | Sub-sub-location area |
| Medium-speed | Sub-location area |
| High-speed | Location area |

**Table 3**

| | |
|---|---|
| Moving state | Location update |
| Normal-speed/medium-speed | Sub-location area |
| High-speed | Location area |

**Table 4**

| | |
|---|---|
| Moving state | Location update |
| Normal-speed | Sub-location area |
| High-speed/medium-speed | Location area |

In the disclosure, the user equipment reports the location area with the corresponding level according to the moving state of the user equipment with reference to the location update policy in the above tables. In the disclosure, a triggering condition for reporting information of the location area comprises: turning on the user equipment, or a preset location update cycle arriving, or spanning over the location area with the level corresponding to the current moving state by the user equipment. Particularly, when the moving state changes, if the moving speed decreases (for example, changes from high speed to normal speed), it may be executed according to a normal-speed principle (for example, when spanning over the location area with the level corresponding to the normal-speed moving state, such as the sub-location area, triggering reporting information of the location area), if the moving speed increases (for example, changes from normal speed to high speed), the user equipment may reports information of the location area when, for the first time, spanning over the location area (for example, sub-location area corresponding to the normal-speed moving state) with the level corresponding to the normal-speed moving state, and then subsequent it may be executed according to a high-speed principle (for example, triggering reporting information of the location area when spanning over the location area with the level corresponding to the high-speed moving state).

Fig. 3 shows a diagram of a location area partitioning way in the disclosure, as shown in Fig. 3, an LA represents a location area, a Sub-LA represents a sub-location area, a Sub-Sub-LA represents a sub-sub-location area, the location areas with different levels as shown in Fig. 3 belong to the location area with a superior level.

In the disclosure, the moving state of the user equipment means the moving speed of the network, in the UMTS, the moving speed of the user equipment is determined by counting the number of cell reselection time for the user equipment, referring to a control parameter of network configuration and comparing according to a certain rule. Other means may be adopted, for example, Global Positioning System (GPS) or the frequency of location update of the user equipment and so on is utilized to determine the moving speed. In the UMTS, the moving state of the user equipment comprises two states, namely the high-speed moving state and the normal-speed moving state. The network side notifies the user equipment of the control parameter through the system message; the control parameter contains: a T_{CRmax,} a N_{CR} and a T_{CRmaxHyst}, wherein the T_{CRmax} is a time range for calculating the number of the cell reselection time, the N_{CR} is the maximum number of the cell reselection time, and the T_{CRmaxHyst} is a time range before the user equipment leaves the high-speed state. The user equipment will determine its own moving state according to these parameters, for example, if the number of the cell reselection time for the user equipment exceeds the N_{CR} within the time range T_{CRmax,} then it will be considered that the user equipment enters the high-speed moving state; if the number of the cell reselection time for the user equipment does not exceed the N_{CR} within the time range T_{CRmax,} the user equipment may choose to remain in the high-speed moving state, or may recovery to the normal-speed moving state if it is found through calculation that the user equipment does not meet the condition (the number of the cell reselection time for the user equipment exceeds the N_{CR} within the time range T_{CRmax)} for entering the high-speed state within the time range T_{CRmaxHyst}.

The essence of the technical solution of the disclosure will be further described below through specific embodiments.

### First Embodiment

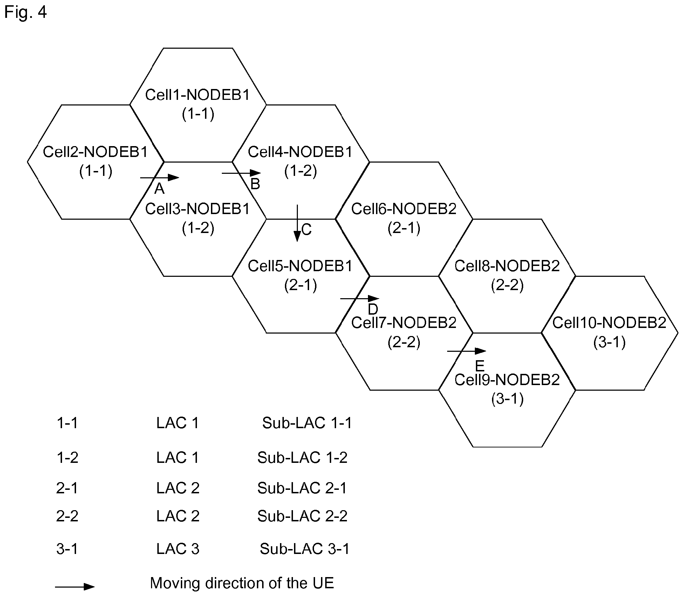

In a UMTS, it is determined that the moving state of the user equipment is divided into two moving states, namely the high-speed moving state and the normal-speed moving state, which correspond to the location area and the sub-location area, respectively. Fig. 4 shows a structure diagram when a user equipment moves in the location areas with different levels in the UMTS, as shown in Fig. 4, cells 1 and 2 belong to a sub-location area 1 of a location area 1 (a Sub-LA-1-1 for short), cells 3 and 4 belong to a sub-location area 2 of the location area 1 (a Sub-LA-1-2 for short), cells 5 and 6 belong to the sub-location area 1 of a location area 2 (a Sub-LA-2-1 for short), cells 7 and 8 belong to the sub-location area 2 of the location area 2 (a Sub-LA-2-2 for short), and cells 9 and 10 belong to the sub-location area 1 of a location area 3 (a Sub-LA-3-1 for short). Cells 1, 2, 3, 4 and 5 belong to a NodeB 1, and cells 6, 7, 8, 9 and 10 belong to a NodeB 2. The user equipment resides in the cell 2 currently and moves along a direction as shown by the arrow, and the current moving state is the normal-speed moving.

When the UE moves to a location A, it resides in the cell 3; since the moving state of the UE is the normal-speed moving state, and the location update should include the information of the sub-location area, the UE sends a location update message including information of the Sub-LA-1-2 to the network side. After receiving the location update message, the network side determines that the UE resides in the Sub-LA-1-2 currently according to the information of the Sub-LA-1-2 and saves the result. If the network side needs to establish a connection with this UE, the Sub-LA-1-2 may be included in a paging message to be sent to the NodeB 1; after receiving the paging message, the NodeB 1 sends the paging message to the cells 3 and 4 belonging to the Sub-LA-1-2.

When the UE moves to a location B, it resides in the cell 4; the UE decides that its own moving state is changed to the high-speed moving state according to a rule determined by a protocol and the control parameter broadcasted by the network. Since the moving state of the UE is the high-speed moving state, and the location update should include the information of the location area, the UE sends a location update message including the information of the location area 1 to the network side. After receiving the location update message, the network side determines that the UE resides in the location area 1 currently. If the network side needs to establish a connection with this UE, the location area 1 is included in the paging message to be sent to the NodeB 1; after receiving the paging message, the NodeB 1 sends the paging message to the cells 1, 2, 3 and 4 belonging to the location area 1.

When the UE moves to a location C, it resides in the cell 5; since the moving state of the UE is the high-speed moving state, and the location update should include the information of the location area, the UE sends the location update message including the information of the location area 2 to the network side. After receiving the location update message, the network side determines that the UE resides in the location area 2 currently. If the network side needs to establish a connection with this UE, then the location area 2 is included in the paging message to be sent to the NodeB 1 and the NodeB 2; after receiving the paging message, the NodeB 1 sends the paging message to the cell 5 belonging to location area 2, and the NodeB 2 sends the paging message to the cells 6, 7 and 8 belonging to the location area 2.

When the UE moves to a location D, it resides in the cell 7; since the moving state of the UE is the high-speed moving state at this time, the cell 7 belongs to the location area 2, and no change occurs, thus no location update message is sent.

When the UE moves to a location E, it resides in the cell 9; since the moving state of the UE is the high-speed moving state, and the location update should include the information of the location area, the UE sends a location update message including the information of the location area 3 to the network side. After receiving the location update message, the network side determines that the UE resides in the location area 3 currently. If the network side needs to establish a connection with this UE, the network side may add the location area 3 into the paging message and then send the paging message to the NodeB 2; after receiving the paging message, the NodeB 2 sends the paging message to the cells 9 and 10 belonging to the location area 2.

After receiving the paging message, the UE responds with a paging response message to the NodeB, and the paging procedure is completed.

The above-mentioned sub-location area belongs to the location area; the partition of the sub-location areas may be independent from the location area, however, the corresponding policy and procedure are similar to the above-mentioned description.

### Second Embodiment

In the UMTS, it is determined that the moving state of the user equipment is divided into two moving states, namely the high-speed moving state and the normal-speed moving state, which correspond to the location area and the sub-location area, respectively. The moving way of the user equipment is the same as that shown in Fig. 4, and is similar to the First Embodiment. The user equipment resides in the cell 2 currently and moves along a direction as shown by the arrow, and the current moving state is the high-speed moving state.

When the UE moves to the location A, it resides in the cell 3; since the moving state of the UE is the high-speed moving state, the cell 3 belongs to the location area 1, and no change occurs, thus no location update message is sent.

When the UE moves to the location B, it resides in the cell 4; since the moving state of the UE is the high-speed moving state, the cell 4 belongs to the location area 1, and no change occurs, thus no location update message is sent.

When the UE moves to the location C, it resides in the cell 5, the UE decides that its own moving state is changed to the normal-speed moving state according to the rule determined by the protocol and the control parameter broadcasted by the network. Since the moving state of the UE is the normal-speed moving state, and the location update should include the information of the sub-location area, the UE sends a location update message including the information of the Sub-LA-2-1 to the network side. If the network side needs to establish a connection with this UE, the network side may add the Sub-LA-2-1 into a paging message and then send the paging message to the NodeB 1 and the NodeB 2; after receiving the paging message, the NodeB 1 sends the paging message to the cell 5 belonging to the Sub-LA-2-1, and the NodeB 2 sends the paging message to the cell 6 belonging to the Sub-LA-2-1.

When the UE moves to the location D, it resides in the cell 7; since the moving state of the UE is the normal-speed moving state, and the location update should include the information of the sub-location area, the UE sends a location update message including the information of the Sub-LA-2-2 to the network side. If the network side needs to establish a connection with this UE, the network side may add the Sub-LA-2-2 into the paging message and then send the paging message to the NodeB 2; after receiving the paging message, the NodeB 2 sends the paging message to the cells 7 and 8 belonging to the Sub-LA-2-2.

When the UE moves to the location E, it resides in the cell 9; since the moving state of the UE is the normal-speed moving state, and the location update should include the information of the sub-location area, the UE sends a location update message including the information of the Sub-LA-3-1 to the network side. After receiving the location update message, the network side determines that the UE resides in the Sub-LA-3-1 currently. If the network side needs to establish a connection with this UE, the network side may add the Sub-LA-3-1 into the paging message and then send the paging message to the NodeB 2; after receiving the paging message, the NodeB 2 sends the paging message to the cells 9 and 10 belonging to the Sub-LA-3-1.

After receiving the paging message, the UE responds with a paging response message to the NodeB, and the paging procedure is completed.

### Third Embodiment

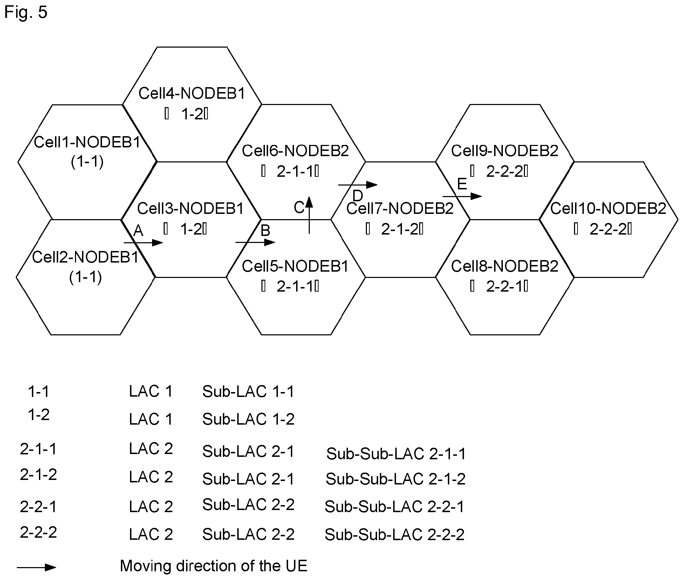

In a GERAN system, it is determined that the moving state of the user equipment is divided into three moving states, namely the high-speed moving state, the medium-speed moving state and the normal-speed moving state, which correspond to the location area, the sub-location area and the sub-sub-location area, respectively; for the sub-location area in which no sub-sub-location area is divided, the sub-location area is used to replace the sub-sub-location area. Fig. 5 shows a structure diagram when a user equipment moves in location areas with different levels in a GERAN system, as shown in Fig. 5, cells 1 and 2 belong to a sub-location area 1 of a location area 1 (a Sub-LA-1-1 for short), cells 3 and 4 belong to a sub-location area 2 of the location area 1 (a Sub-LA-1-2 for short), cells 5 and 6 belong to a sub-sub-location area 1 of the sub-location area 1 of a location area 2 (a Sub-LA-2-1-1 for short), a cell 7 belongs to a sub-sub-location area 2 of the sub-location area 1 of the location area 2 (a Sub-LA-2-1-2 for short), a cell 8 belongs to the sub-sub-location area 1 of the sub-location area 2 of the location area 2 (Sub-LA-2-2-1 for short), cells 9 and 10 belong to the sub-sub-location area 2 of the sub-location area 2 of the location area 2 (a Sub-LA-2-2-2 for short). The cells 1, 2, 3, 4 and 5 belong to a NodeB 1, and the cells 6, 7, 8, 9 and 10 belong to a NodeB 2. The user equipment resides in the cell 2 currently and moves along a direction as shown by the arrow, and the current moving state is the normal-speed moving state.

When the UE moves to a location A, it resides in the cell 3; since the moving state of the UE is the normal-speed moving state, the location update should include the information of the sub-sub-location area; however, in the location area 1, no sub-sub-location area is divided, the location update can only include the information of the sub-location area, and the UE sends a location update message including the information of the Sub-LA-1-2 to the network side. After receiving the location update message, the network side determines that the UE resides in the Sub-LA-1-2 currently. If the network side needs to establish a connection with this UE, the network side may add the Sub-LA-1-2 into a paging message and then send the paging message to the NodeB 1; after receiving the paging message, the NodeB 1 sends the paging message to the cells 3 and 4 belonging to the Sub-LA-1-2.

When the UE moves to a location B, it resides in the cell 5; since the moving state of the UE is the normal-speed moving state, and the location update should include the information of the sub-sub-location area, the UE sends a location update message including the information of the Sub-Sub-LA-2-1-1 to the network side. After receiving the location update message, the network side determines that the UE resides in the Sub-Sub-LA-2-1-1. If the network side needs to establish a connection with this UE, the network side may add the Sub-Sub-LA-2-1-1 into the paging message and then send the paging message to the NodeB 1 and the NodeB 2; after receiving the paging message, the NodeB 1 sends the paging message to the cell 5 belonging to the Sub-Sub-LA-2-1-1, and the NodeB 2 sends the paging message to the cell 6 belonging to the Sub-Sub-LA-2-1-1.

When the UE moves to a location C, it resides in the cell 6, the UE decides that its own moving state is changed to the medium-speed moving state according to the rule determined in the protocol and the control parameter broadcasted by the network. Since the moving state of the UE is the medium-speed moving state, and the location update should include the information of the sub-location area, the UE sends a location update message including the information of the Sub-LA-2-1 to the network side. After receiving the location update message, the network side determines that the UE resides in the Sub-LA-2-1 currently. If the network side needs to establish a connection with this UE, the network side may add the Sub-LA-2-1 into the paging message and then send the paging message to the NodeB 1 and the NodeB 2; after receiving the paging message, the NodeB 1 sends the paging message to the cell 5 belonging to the Sub-LA-2-1, and the NodeB 2 sends the paging message to the cells 6 and 7 belonging to the Sub-LA-2-1.

When the UE moves to a location D, it resides in the cell 7; since the moving state of the UE is the medium-speed moving state, the location update should include the information of the sub-location area, the cell 7 belongs to sub-location area Sub-LA-2-1, and no change occurs, thus no location update message is sent.

When the UE moves to a location E, it resides in the cell 9, the UE decides that its own moving state is changed to the high-speed moving state according to the rule determined in the protocol and the control parameter broadcasted by the network. Since the moving state of the UE is the high-speed moving state, and the location update should include the information of the location area, the UE sends a location update message including the information of the location area 2 to the network side. After receiving the location update message, the network side determines that the UE resides in the location area 2 currently. If the network side needs to establish a connection with this UE, the network side may add the location area 2 into the paging message and then send the paging message to the NodeB 2; after receiving the paging message, the NodeB 2 sends the paging message to the cells 5, 6, 7, 8, 9 and 10 belonging to the location area 2.

After receiving the paging message, the UE responds with a paging response message to the NodeB, and the paging procedure is completed.

### Fourth Embodiment

In the GERAN system, it is determined that the moving state of the user equipment is divided into three moving states, namely the high-speed moving state, the medium-speed moving state and the normal-speed moving state, which correspond to the location area, the sub-location area and the sub-sub-location area, respectively; for the sub-location area in which no sub-sub-location area is divided, the sub-location area is used to replace the sub-sub-location area. The moving way of the user equipment is completely the same as that shown in Fig. 5, and is similar to that described in the Third Embodiment. The user equipment resides in the cell 2 currently and moves along a direction as shown by the arrow, and the current moving state is the high-speed moving state.

When the UE moves to the location A, it resides in the cell 3; since the moving state of the UE is the high-speed moving state, the cell 3 belongs to the location area 1, and no change occurs, thus no location update message is sent.

When the UE moves to the location B, it resides in the cell 5, the UE decides that its own moving state is changed to the medium-speed moving state according to the rule determined in the protocol and the control parameter broadcasted by the network. Since the moving state of the UE is the medium-speed moving state, and the location update should include the information of the sub-location area, the UE sends a location update message including the information of the Sub-LA-2-1 to the network side. If the network side needs to establish a connection with this UE, the network side may add the Sub-LA-2-1 into a paging message and then send the paging message to the NodeB 1 and the NodeB 2; after receiving the paging message, the NodeB 1 sends the paging message to the cell 5 belonging to the Sub-LA-2-1, and the NodeB 2 sends the paging message to the cells 6 and 7 belonging to the Sub-LA-2-1.

When the UE moves to the location C, it resides in the cell 6; since the moving state of the UE is the medium-speed moving state, the location update should include the information of the sub-location area, the cell 3 belongs to the Sub-LA-2-1, and no change occurs, thus no location update message is sent.

When the UE moves to the location D, it resides in the cell 7, the UE decides that its own moving state is changed to the normal-speed moving state according to the rule determined in the protocol and the control parameter broadcasted by the network. Since the moving state of the UE is the normal-speed moving state, and the location update should include the information of the sub-sub-location area, the UE sends a location update message including information of the Sub-Sub-LA-2-1-2 to the network side. After receiving the location update message, the network side determines that the UE resides in the Sub-Sub-LA-2-1-2. If the network side needs to establish a connection with this UE, the network side may add the Sub-Sub-LA-2-1-2 into the paging message and then send the paging message to the NodeB 2; after receiving the paging message, the NodeB 2 sends the paging message to the cell 7 belonging to the Sub-Sub-LA-2-1-2.

When the UE moves to the location E, it resides in the cell 9; since the moving state of the UE is the normal-speed moving state, and the location update should include the information of the sub-sub-location area, the UE sends a location update message including the information of the Sub-Sub-LA-2-2-2 to the network side. After receiving the location update message, the network side determines that the UE resides in the Sub-Sub-LA-2-2-2 currently. If the network side needs to establish a connection with this UE, the network side may add the Sub-Sub-LA-2-2-2 into the paging message and then send the paging message to the NodeB 2; and after receiving the paging message, the NodeB 2 sends the paging message to the cells 9 and 10 belonging to the Sub-Sub-LA-2-2-2.

After receiving the paging message, the UE responds with a paging response message to the NodeB, and the paging procedure is completed.

### Fifth Embodiment

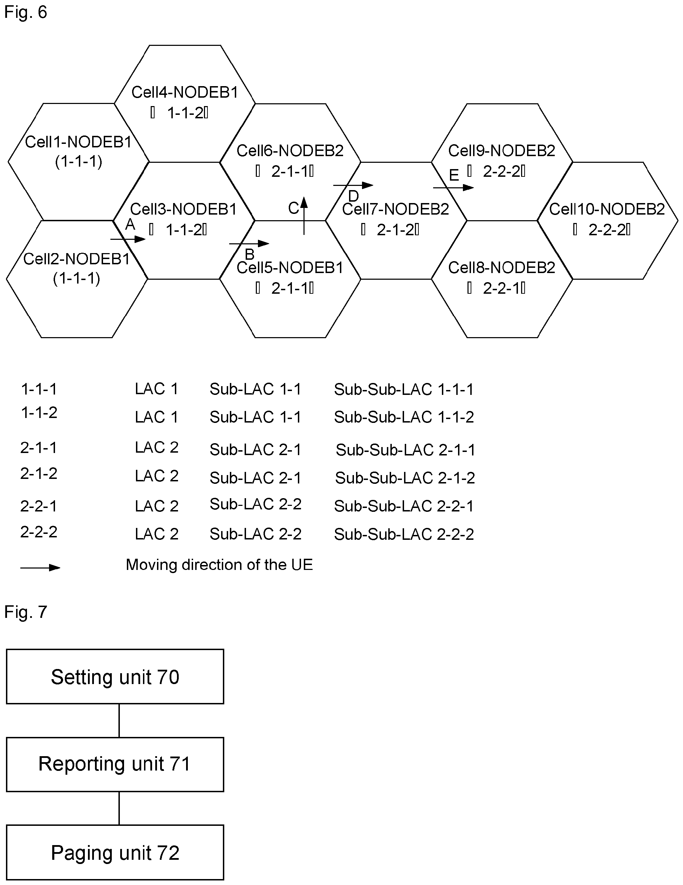

In an LTE system, it is determined that the moving state of the user equipment is divided into two moving states, namely the high-speed moving state and the normal-speed moving state, which correspond to the location area and the sub-location area, respectively. Fig. 6 shows a structure diagram when a user equipment moves in location areas with different levels in a Long Term Evolution (LTE) system, as shown in Fig. 6, cells 1 and 2 belong to a sub-sub-location area 1 of a sub-location area 1 of a location area 1 (a Sub-LA-1-1-1 for short), cells 3 and 4 belong to a sub-sub-location area 2 of the sub-location area 1 of the location area 1 (a Sub-LA-1-1-2 for short), cells 5 and 6 belong to the sub-sub-location area 1 of the sub-location area 1 of a location area 2 (a Sub-LA-2-1-1 for short), a cell 7 belongs to the sub-sub-location area 2 of the sub-location area 1 of the location area 2 (a Sub-LA-2-1-2 for short), a cell 8 belongs to the sub-sub-location area 1 of the sub-location area 2 of the location area 2 (a Sub-LA-2-2-1 for short), cells 9 and 10 belong to the sub-sub-location area 2 of the sub-location area 2 of the location area 2 (a Sub-LA-2-2-2 for short). The cells 1, 2, 3, 4 and 5 belong to a NodeB 1, and the cells 6, 7, 8, 9 and 10 belong to a NodeB 2. The user equipment resides in the cell 2 currently and moves along a direction as shown by the arrow, and the current moving state is the normal-speed moving state.

When the UE moves to a location A, it resides in the cell 3; since the moving state of the UE is the normal-speed moving state, and the location update should include the information of the sub-sub-location area, the UE sends a location update message including the information of the Sub-Sub-LA-1-1-2 to the network side. After receiving the location update message, the network side determines that the UE resides in the Sub-Sub-LA-1-1-2 currently. If the network side needs to establish a connection with this UE, the network side may add the Sub-Sub-LA-1-1-2 into a paging message and then send the paging message to the NodeB 1; after receiving the paging message, the NodeB 1 sends the paging message to the cells 3 and 4 belonging to the Sub-Sub-LA-1-1-2.

When the UE moves to a location B, it resides in the cell 5; since the moving state of the UE is the normal-speed moving state, and the location update should include the information of the sub-sub-location area, the UE sends a location update message including the information of the Sub-Sub-LA-2-1-1 to the network side. After receiving the location update message, the network side determines that the UE resides in the Sub-Sub-LA-2-1-1. If the network side needs to establish a connection with this UE, the network side may add the Sub-Sub-LA-2-1-1 into the paging message and then send the paging message to the NodeB 1 and the NodeB 2; after receiving the paging message, the NodeB 1 sends the paging message to the cell 5 belonging to the Sub-Sub-LA-2-1-1, and the NodeB 2 sends the paging message to the cell 6 belonging to the Sub-Sub-LA-2-1-1.

When the UE moves to a location C, it resides in the cell 6, the UE decides that its own moving state is changed to the medium-speed moving state according to the rule determined in the protocol and the control parameter broadcasted by the network. Since the moving state of the UE is the medium-speed moving state, and the location update should include the information of the sub-location area, the UE sends a location update message including the information of the Sub-LA-2-1 to the network side. After receiving the location update message, the network side determines that the UE resides in the Sub-LA-2-1 currently. If the network side needs to establish a connection with this UE, the network side may add the Sub-LA-2-1 into the paging message and then send the paging message to the NodeB 1 and the NodeB 2; after receiving the paging message, the NodeB 1 sends the paging message to the cell 5 belonging to the Sub-LA-2-1, and the NodeB 2 sends the paging message to the cells 6 and 7 belonging to the Sub-LA-2-1.

When the UE moves to a location D, it resides in the cell 7; since the moving state of the UE is the medium-speed moving state, the location update should include the information of the sub-location area, the cell 3 belongs to the sub-location area Sub-LA-2-1, and no change occurs, thus no location update message is sent.

When the UE moves to a location E, it resides in the cell 9, the UE decides that its own moving state is changed to the high-speed moving state according to the rule determined in the protocol and the control parameter broadcasted by the network. Since the moving state of the UE is the high-speed moving state, and the location update should include the information of the location area, the UE sends a location update message including the information of the location area 2 to the network side. After receiving the location update message, the network side determines that the UE resides in the location area 2 currently. If the network side needs to establish a connection with this UE, the network side may add the location area 2 into the paging message and then send the paging message to the NodeB 1 and the NodeB 2; after receiving the paging message, the NodeB 1 sends the paging message to the cell 5 belonging to the location area 2, and the NodeB 2 sends the paging message to the cells 6, 7, 8, 9 and 10 belonging to the location area 2.

After receiving the paging message, the UE responds with a paging response message to the NodeB, and the paging procedure is completed.

Fig. 7 shows a structure diagram of a user equipment paging system according to the disclosure, as shown in Fig. 7, the user equipment paging system according to the disclosure comprises a setting unit 70, a reporting unit 71 and a paging unit 72, wherein the setting unit 70 is configured to set location areas with different levels, and set corresponding relation between a moving state of a user equipment and the level of the location area; the reporting unit 71 is located in the user equipment and is configured to report information of the location area with the corresponding level to a network side according to the current moving state of the user equipment; the paging unit 72 is located in a network element and is configured to initiate paging for the user equipment.

The setting unit 70 is further configured to set a location update triggering condition; when the location update triggering condition is met, the reporting unit 71 is configured to report the information of the location area with the corresponding level according to the current moving state of the user equipment.

Wherein, the location update triggering condition comprises: turning on the user equipment, or a preset location update cycle arriving, or spanning over the location area with the level corresponding to the current moving state by the user equipment.

Further, the setting unit 71 is configured to set a sub-location area smaller than a coverage area of the location area, and/or to set a sub-sub-location area smaller than a coverage area of a sub-location area, wherein a minimum unit of the location areas with different levels is a cell. Further, the moving state of the user equipment comprises: a high-speed moving state and a normal-speed moving state; or a high-speed moving state, a medium-speed moving state and a normal-speed moving state;
the reporting unit 71 is configured to report the location area when the moving state is the high-speed moving state, and to report the sub-location area when the moving state is the normal-speed moving state; or, the reporting unit 71 is configured to report the location area when the moving state is the high-speed moving state, to report the sub-location area when the moving state is the medium-speed moving state, and to report the sub-sub-location area when the moving state is the normal-speed moving state; or, the reporting unit 71 is configured to report the location area when the moving state is the high-speed moving state or the medium-speed moving state, and to report the sub-location area when the moving state is the normal-speed moving state; or, the reporting unit 71 is configured to report the location area when the moving state is the high-speed moving state, and to report the sub-location area when the moving state is the medium-speed moving state or the normal-speed moving state.

It should be understood by those skilled in the art that, the indication device in the frame mapping mode as shown in Fig. 7 is designed to implement the above-mentioned indication method in the frame mapping mode, the function of each processing unit in the system as shown in Fig. 7 may be understood with reference to the relevant description in the above-mentioned user equipment paging method, and the function of each processing unit may be implemented by a program operating in a processor and may also be implemented through a specific logic circuit.

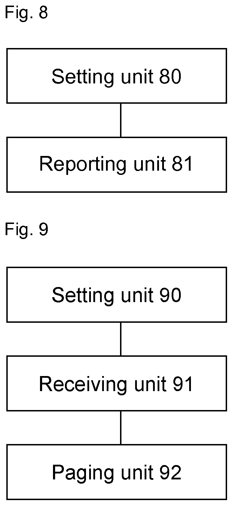

Fig. 8 shows a structure diagram of a user equipment according to the disclosure, as shown in Fig. 8, the user equipment according to the disclosure comprises: a setting unit 80 and a reporting unit 81, wherein the setting unit 80 is configured to set location areas with different levels, and to set corresponding relation between a moving state of the user equipment and the level of the location area; the reporting unit 81 is located in the user equipment and is configured to report information of the location area with the corresponding level to a network side according to the current moving state of the user equipment.

The setting unit 80 is further configured to set a location update triggering condition; when the location update triggering condition is met, the reporting unit 81 is configured to report the information of the location area with the corresponding level according to the current moving state of the user equipment.

Wherein, the location update triggering condition comprises: turning on the user equipment, or a preset location update cycle arriving, or spanning over the location area with the level corresponding to the current moving state by the user equipment.

Further, the setting unit 81 is configured to set a sub-location area smaller than a coverage area of the location area, and/or to set a sub-sub-location area smaller than a coverage area of a sub-location area, wherein a minimum unit of the location areas with different levels is a cell. Further, the moving state comprises: a high-speed moving state and a normal-speed moving state; or a high-speed moving state, a medium-speed moving state and a normal-speed moving state;
the reporting unit 81 is configured to report the location area when the moving state is the high-speed moving state, and to report the sub-location area when the moving state is the normal-speed moving state; or, the reporting unit 81 is configured to report the location area when the moving state is the high-speed moving state, to report the sub-location area when the moving state is the medium-speed moving state, and to report the sub-sub-location area when the moving state is the normal-speed moving state; or, the reporting unit 81 is configured to report the location area when the moving state is the high-speed moving state or the medium-speed moving state, and to report the sub-location area when the moving state is the normal-speed moving state; or, the reporting unit 81 is configured to report the location area when the moving state is the high-speed moving state, and to report the sub-location area when the moving state is the medium-speed moving state or the normal-speed moving state.

It should be understood by those skilled in the art that, the function of each processing unit in the user equipment as shown in Fig. 8 may be understood with reference to the relevant description in the above-mentioned user equipment paging method, and the function of each processing unit may be implemented by a program operating in a processor and may also be implemented through a specific logic circuit.

Fig. 9 shows a structure diagram of a paging network according to the disclosure, as shown in Fig. 9, the paging network in the disclosure comprises: a setting unit 90, a receiving unit 91 and a paging unit 92, wherein the setting unit 90 is configured to set location areas with different levels, and to set corresponding relation between a moving state of a user equipment and the level of the location area; the receiving unit 91 is configured to receive information of the location area with the level corresponding to the current moving state of the user equipment, which is reported by the user equipment; the paging unit 92 is configured to initiate paging for the user equipment in the location area reported by the user equipment. Wherein, the setting unit 90 is further configured to set a sub-location area smaller than a coverage area of the location area, and/or to set a sub-sub-location area smaller than a coverage area of a sub-location area, wherein a minimum unit of the location areas with different levels is a cell. The moving state comprises: a high-speed moving state and a normal-speed moving state; or a high-speed moving state, a medium-speed moving state and a normal-speed moving state;
the user equipment is configured to report the location area when the moving state is the high-speed moving state, and to report the sub-location area when the moving state is the normal-speed moving state;
or, the user equipment is configured to report the location area when the moving state is the high-speed moving state, to report the sub-location area when the moving state is the medium-speed moving state, and to report the sub-sub-location area when the moving state is the normal-speed moving state;
or, the user equipment is configured to report the location area when the moving state is the high-speed moving state or the medium-speed moving state, and to report the sub-location area when the moving state is the normal-speed moving state;
or, the user equipment is configured to report the location area when the moving state is the high-speed moving state, and to report the sub-location area when the moving state is the medium-speed moving state or the normal-speed moving state.

It should be understood by those skilled in the art that, the function of each processing unit in the user equipment as shown in Fig. 9 may be understood with reference to the relevant description in the above-mentioned user equipment paging method, and the function of each processing unit may be implemented by a program operating in a processor and may also be implemented through a specific logic circuit.

Above contents are only preferred embodiments of the disclosure and are not intended to limit the protection scope of the disclosure.

## Claims

1. A user equipment paging method, comprising: setting location areas with different levels and setting corresponding relation between a moving state of a user equipment and the level of the location area by a paging network; further comprising:
reporting information of the location area with the corresponding level to a network side by the user equipment according to the current moving state of the user equipment;
initiating paging for the user equipment by the network side in the location area with the corresponding level reported by the user equipment,
wherein the step of setting location areas with different levels comprises: setting a sub-location area smaller than a coverage area of the location area, and/or setting a sub-sub-location area smaller than a coverage area of a sub-location area, wherein a minimum unit of the location areas with different levels is a cell,
**characterized in that** the sub-location area is independent from the location area, and/or the sub-sub-location area is independent from the sub-location area.

2. The method according to claim 1, further comprising: setting a location update triggering condition; when the location update triggering condition is met, reporting the information of the location area with the corresponding level by the user equipment according to the level of the current moving state.

3. The method according to claim 2, wherein the location update triggering condition comprises: turning on the user equipment, or a preset location update cycle arriving, or spanning over the location area with the level corresponding to the current moving state by the user equipment.

4. The method according to claim 1, wherein the moving state comprises: a high-speed moving state and a normal-speed moving state; or a high-speed moving state, a medium-speed moving state and a normal-speed moving state;
the step of setting the corresponding relation between the moving state and the level of the location area reported by the user equipment further comprises:
reporting the location area when the moving state is the high-speed moving state, and reporting the sub-location area when the moving state is the normal-speed moving state;
or, reporting the location area when the moving state is the high-speed moving state, reporting the sub-location area when the moving state is the medium-speed moving state, and reporting the sub-sub-location area when the moving state is the normal-speed moving state;
or, reporting the location area when the moving state is the high-speed moving state or the medium-speed moving state, and reporting the sub-location area when the moving state is the normal-speed moving state;
or, reporting the location area when the moving state is the high-speed moving state, and reporting the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of Universal Mobile Telecommunication System UMTS; otherwise, by using Global Positioning System or the frequency of location update of the user equipment.

5. A user equipment, comprising: a setting unit and a reporting unit;
the setting unit (70) is configured to set location areas with different levels, and to set corresponding relation between a moving state of the user equipment and the level of the location area; and
the reporting unit (71) is located in the user equipment and is configured to report information of the location area with the corresponding level to a network side according to the current moving state of the user equipment,
wherein the setting unit (70) is further configured to set a sub-location area smaller than a coverage area of the location area, and/or to set a sub-sub-location area smaller than a coverage area of a sub-location area, wherein a minimum unit of the location areas with different levels is a cell,
**characterized in that** the sub-location area is independent from the location area,
and/or the sub-sub-location area is independent from the sub-location area.

6. The user equipment according to claim 5, wherein the setting unit (70) is further configured to set a location update triggering condition; when the location update triggering condition is met, the reporting unit (71) is configured to report the information of the location area with the corresponding level according to the current moving state of the user equipment.

7. The user equipment according to claim 6, wherein the location update triggering condition comprises: turning on the user equipment, or a preset location update cycle arriving, or spanning over the location area with the level corresponding to the current moving state by the user equipment.

8. The user equipment according to claim 5, wherein the moving state comprises: a high-speed moving state and a normal-speed moving state; or a high-speed moving state, a medium-speed moving state and a normal-speed moving state;
the reporting unit (71) is configured to report the location area when the moving state is the high-speed moving state, and to report the sub-location area when the moving state is the normal-speed moving state;
or, the reporting unit (70) is configured to report the location area when the moving state is the high-speed moving state, to report the sub-location area when the moving state is the medium-speed moving state, and to report the sub-sub-location area when the moving state is the normal-speed moving state;
or, the reporting unit (70) is configured to report the location area when the moving state is the high-speed moving state or the medium-speed moving state, and to report sub-location area when the moving state is the normal-speed moving state;
or, the reporting unit (70) is configured to report the location area when the moving state is the high-speed moving state, and to report the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of the UMTS; otherwise, by using Global Positioning System or the frequency of location update of the user equipment.

9. A paging network, comprising: a setting unit (90), a receiving unit (91) and a paging unit (92);
the setting unit (90) is configured to set location areas with different levels, and to set corresponding relation between a moving state of a user equipment and the level of the location area;
the receiving unit (91) is configured to receive information of the location area with the level corresponding to the current moving state of the user equipment, which is reported by the user equipment; and
the paging unit (92) is configured to initiate paging for the user equipment in the location area reported by the user equipment,
wherein the setting unit (90) is further configured to set a sub-location area smaller than a coverage area of the location area, and/or to set a sub-sub-location area smaller than a coverage area of a sub-location area, wherein a minimum unit of the location areas with different levels is a cell,
**characterized in that** the sub-location area is independent from the location area,
and/or the sub-sub-location area is independent from the sub-location area.

10. The paging network according to claim 9, wherein the moving state comprises a high-speed moving state and a normal-speed moving state; or a high-speed moving state, a medium-speed moving state and a normal-speed moving state;
the user equipment is configured to report the location area when the moving state is the high-speed moving state, and to report the sub-location area when the moving state is the normal-speed moving state;
or, the user equipment is configured to report the location area when the moving state is the high-speed moving state, to report the sub-location area when the moving state is the medium-speed moving state, and to report the sub-sub-location area when the moving state is the normal-speed moving state;
or, the user equipment is configured to report the location area when the moving state is the high-speed moving state or the medium-speed moving state, and to report the sub-location area when the moving state is the normal-speed moving state;
or, the user equipment is configured to report the location area when the moving state is the high-speed moving state, and to report the sub-location area when the moving state is the medium-speed moving state or the normal-speed moving state,
wherein, the moving state is determined by counting the number of cell reselection time for the user equipment, referring to a control parameter of network configuration and comparing according to a certain rule, in the case of the UMTS; otherwise, by using Global Positioning System or the frequency of location update of the user equipment.

## Patentansprüche

1. Funkrufverfahren für ein Benutzerendgerät, das aufweist:
Festlegen von Aufenthaltsbereichen mit verschiedenen Ausmaßen und Festlegen einer korrespondierenden Beziehung zwischen einem Bewegungszustand eines Benutzerendgeräts und dem Ausmaß des Aufenthaltsbereichs durch ein Funkrufnetz; zudem aufweisend:
Berichten von Information zum Aufenthaltsbereich mit dem entsprechend dem derzeitigen Bewegungszustand des Benutzerendgeräts korrespondierenden Ausmaß an eine Netzseite durch das Benutzerendgerät;
Initiieren eines Funkrufs für das Benutzerendgerät durch die Netzseite in dem Aufenthaltsbereich mit dem korrespondierenden Ausmaß, welcher durch das Benutzerendgerät berichtet wird,
wobei der Schritt des Festlegens von Aufenthaltsbereichen mit verschiedenen Ausmaßen aufweist: Festlegen eines Unter-Aufenthaltsbereichs, der kleiner ist als ein Abdeckungsbereich des Aufenthaltsbereichs, und/oder Festlegen eines Unter-Unter-Aufenthaltsbereichs, der kleiner ist als ein Abdeckungsbereich eines Unter-Aufenthaltsbereichs, wobei eine kleinste Einheit der Aufenthaltsbereiche mit verschiedenen Ausmaßen eine Zelle ist,
**dadurch gekennzeichnet,**
**dass** der Unter-Aufenthaltsbereich unabhängig von dem Aufenthaltsbereich ist und/oder der Unter-Unter-Aufenthaltsbereich unabhängig von dem Unter-Aufenthaltsbereich ist.

2. Verfahren nach Anspruch 1, das zudem aufweist:
Festlegen einer Auslösebedingung für eine Aufenthaltsaktualisierung;
Berichten der Information zum Aufenthaltsbereich mit dem entsprechend dem Ausmaß des derzeitigen Bewegungszustands korrespondierenden Ausmaß durch das Benutzerendgerät, wenn der Auslösebedingung für eine Aufenthaltsaktualisierung genügt wird.

3. Verfahren nach Anspruch 2,
wobei die Auslösebedingung für eine Aufenthaltsaktualisierung aufweist:
Einschalten des Benutzerendgeräts oder ein sich einstellender vorgegebener Aufenthaltsaktualisierungszyklus oder Überspannen des Aufenthaltsbereichs mit dem mit dem derzeitigen Bewegungszustand korrespondierenden Ausmaß durch das Benutzerendgerät.

4. Verfahren nach Anspruch 1,
wobei der Bewegungszustand aufweist:
einen Hochgeschwindigkeitsbewegungszustand und einen Normalgeschwindigkeitsbewegungszustand; oder einen Hochgeschwindigkeitsbewegungszustand, einen Durchschnittsgeschwindigkeitsbewegungszustand und einen Normalgeschwindigkeitsbewegungszustand;
wobei der Schritt des Festlegens der korrespondierenden Beziehung zwischen dem Bewegungszustand und dem Ausmaß des Aufenthaltsbereichs, der durch das Benutzerendgerät berichtet wird, zudem aufweist:
Berichten des Aufenthaltsbereichs, wenn der Bewegungszustand der Hochgeschwindigkeitsbewegungszustand ist, und Berichten des Unter-Aufenthaltsbereichs, wenn der Bewegungszustand der Normalgeschwindigkeitsbewegungszustand ist;
oder Berichten des Aufenthaltsbereichs, wenn der Bewegungszustand der Hochgeschwindigkeitsbewegungszustand ist, Berichten des Unter-Aufenthaltsbereichs, wenn der Bewegungszustand der Durchschnittsgeschwindigkeitsbewegungszustand ist, und Berichten des Unter-Unter-Aufenthaltsbereichs, wenn der Bewegungszustand der Normalgeschwindigkeitsbewegungszustand ist;
oder Berichten des Aufenthaltsbereichs, wenn der Bewegungszustand der Hochgeschwindigkeitsbewegungszustand oder der Durchschnittsgeschwindigkeitsbewegungszustand ist, und Berichten des Unter-Aufenthaltsbereichs, wenn der Bewegungszustand der Normalgeschwindigkeitsbewegungszustand ist;
oder Berichten des Aufenthaltsbereichs, wenn der Bewegungszustand der Hochgeschwindigkeitsbewegungszustand ist, und Berichten des Unter-Aufenthaltsbereichs, wenn der Bewegungszustand der Durchschnittsgeschwindigkeitsbewegungszustand oder der Normalgeschwindigkeitsbewegungszustand ist,
wobei der Bewegungszustand in dem Fall eines Universal Mobile Telecommunication System UMTS durch Zählen der Zahl der Zellneuauswahlzeit für das Benutzerendgerät bestimmt wird, bezugnehmend auf einen Steuerparameter der Netzkonfiguration und Vergleichen gemäß einer bestimmten Regel; anderenfalls, unter Verwendung des Global Positioning Systems oder der Frequenz der Aufenthaltsaktualisierung des Benutzerendgeräts.

5. Nutzerendgerät, das aufweist:
eine Festlegungseinheit und eine Berichtseinheit;
wobei die Festlegungseinheit (70) ausgebildet ist, Aufenthaltsbereiche mit verschiedenen Ausmaßen festzulegen und eine korrespondierende Beziehung zwischen einem Bewegungszustand des Benutzerendgeräts und dem Ausmaß des Aufenthaltsbereichs festzulegen; und
wobei die Berichtseinheit (71) sich in dem Benutzerendgerät befindet und ausgebildet ist, Information zum Aufenthaltsbereich mit dem entsprechend dem derzeitigen Bewegungszustand des Benutzerendgeräts korrespondierenden Ausmaß einer Netzseite zu berichten,
wobei die Festlegungseinheit (70) zudem ausgebildet ist, einen Unter-Aufenthaltsbereich festzulegen, der kleiner ist als ein Abdeckungsbereich des Aufenthaltsbereichs, und/oder einen Unter-Unter-Aufenthaltsbereich festzulegen, der kleiner ist als ein Abdeckungsbereich eines Unter-Aufenthaltsbereichs, wobei eine kleinste Einheit der Aufenthaltsbereiche mit verschiedenen Ausmaßen eine Zelle ist,
**dadurch gekennzeichnet,**
**dass** der Unter-Aufenthaltsbereich unabhängig von dem Aufenthaltsbereich ist;
und/oder der Unter-Unter-Aufenthaltsbereich unabhängig von dem Unter-Aufenthaltsbereich ist.

6. Benutzerendgerät nach Anspruch 5,
wobei die Festlegungseinheit (70) zudem ausgebildet ist, eine Auslösebedingung für eine Aufenthaltsaktualisierung festzulegen;
wobei die Berichtseinheit (71) ausgebildet ist, die Information zum Aufenthaltsbereich mit dem entsprechend dem Bewegungszustand des Benutzerendgeräts korrespondierenden Ausmaß zu berichten, wenn der Auslösebedingung für eine Aufenthaltsaktualisierung genügt wird.

7. Benutzerendgerät nach Anspruch 6,
wobei die Auslösebedingung für eine Aufenthaltsaktualisierung aufweist:
Einschalten des Benutzerendgeräts oder einen sich einstellenden vorgegebenen Aufenthaltsaktualisierungszyklus oder Überspannen des Aufenthaltsbereichs mit dem Ausmaß, das mit dem derzeitigen Bewegungszustand korrespondiert, durch das Benutzerendgerät.

8. Benutzerendgerät nach Anspruch 5,
wobei der Bewegungszustand aufweist:
einen Hochgeschwindigkeitsbewegungszustand und einen Normalgeschwindigkeitsbewegungszustand; oder einen Hochgeschwindigkeitsbewegungszustand, einen Durchschnittsgeschwindigkeitsbewegungszustand und einen Normalgeschwindigkeitsbewegungszustand;
wobei die Berichtseinheit (71) ausgebildet ist, den Aufenthaltsbereich zu berichten, wenn der Bewegungszustand der Hochgeschwindigkeitsbewegungszustand ist, und den Unter-Aufenthaltsbereich zu berichten, wenn der Bewegungszustand der Normalgeschwindigkeitsbewegungszustand ist;
oder die Berichtseinheit (70) ausgebildet ist, den Aufenthaltsbereich zu berichten, wenn der Bewegungszustand der Hochgeschwindigkeitsbewegungszustand ist, den Unter-Aufenthaltsbereich zu berichten, wenn der Bewegungszustand der Durchschnittsgeschwindigkeitsbewegungszustand ist, und den Unter-Unter-Aufenthaltsbereich zu berichten, wenn der Bewegungszustand der Normalgeschwindigkeitsbewegungszustand ist;
oder die Berichtseinheit (70) ausgebildet ist, den Aufenthaltsbereich zu berichten, wenn der Bewegungszustand der Hochgeschwindigkeitsbewegungszustand oder der Durchschnittsgeschwindigkeitsbewegungszustand ist, und den Unter-Aufenthaltsbereich zu berichten, wenn der Bewegungszustand der Normalgeschwindigkeitsbewegungszustand ist;
oder die Berichtseinheit (70) ausgebildet ist, den Aufenthaltsbereich zu berichten, wenn der Bewegungszustand der Hochgeschwindigkeitsbewegungszustand ist, und den Unter-Aufenthaltsbereich zu berichten, wenn der Bewegungszustand der Durchschnittsgeschwindigkeitsbewegungszustand oder der Normalgeschwindigkeitsbewegungszustand ist,
wobei der Bewegungszustand in dem Fall des UMTS durch Zählen der Zahl der Zellneuauswahlzeit für das Benutzerendgerät bestimmt wird, bezugnehmend auf ein Steuerparameter der Netzkonfiguration und Vergleichen gemäß einer bestimmten Regel; anderenfalls, unter Verwendung des Global Positioning Systems oder der Frequenz der Aufenthaltsaktualisierung des Benutzerendgeräts.

9. Funkrufnetz, das aufweist:
eine Festlegungseinheit (90), eine Empfangseinheit (91) und eine Funkrufeinheit (92);
wobei die Festlegungseinheit (90) ausgebildet ist, Aufenthaltsbereiche mit verschiedenen Ausmaßen festzulegen und eine korrespondierende Beziehung zwischen einem Bewegungszustand eines Benutzerendgeräts an dem Ausmaß des Aufenthaltsbereichs festzulegen;
wobei die Empfangseinheit (91) ausgebildet ist, Information zum Aufenthaltsbereich mit dem Ausmaß, das mit dem derzeitigen Bewegungszustand des Benutzerendgeräts korrespondiert, zu empfangen, die von dem Benutzerendgerät berichtet wird; und
wobei die Funkrufeinheit (92) ausgebildet ist, einen Funkruf für das Benutzerendgerät in dem von dem Benutzerendgerät berichteten Aufenthaltsbereich zu initiieren,
wobei die Festlegungseinheit (90) zudem ausgebildet ist, einen Unter-Aufenthaltsbereich festzulegen, der kleiner ist als ein Abdeckungsbereich des Aufenthaltsbereichs, und/oder einen Unter-Unter-Aufenthaltsbereich festzulegen, der kleiner ist als ein Abdeckungsbereich eines Unter-Aufenthaltsbereichs, wobei eine kleinste Einheit der Aufenthaltsbereiche mit verschiedenen Ausmaßen eine Zelle ist,
**dadurch gekennzeichnet,**
**dass** der Unter-Aufenthaltsbereich unabhängig von dem Aufenthaltsbereich ist, und/oder der Unter-Unter-Aufenthaltsbereich unabhängig von dem Unter-Aufenthaltsbereich ist.

10. Funkrufnetz nach Anspruch 9,
wobei der Bewegungszustand einen Hochgeschwindigkeitsbewegungszustand und einen Normalgeschwindigkeitsbewegungszustand aufweist; oder einen Hochgeschwindigkeitsbewegungszustand, einen Durchschnittsgeschwindigkeitsbewegungszustand und einen Normalgeschwindigkeitsbewegungszustand;
wobei das Benutzerendgerät ausgebildet ist, den Aufenthaltsbereich zu berichten, wenn der Bewegungszustand der Hochgeschwindigkeitsbewegungszustand ist, und den Unter-Aufenthaltsbereich zu berichten, wenn der Bewegungszustand der Normalgeschwindigkeitsbewegungszustand ist;
oder das Benutzerendgerät ausgebildet ist, den Aufenthaltsbereich zu berichten, wenn der Bewegungszustand der Hochgeschwindigkeitsbewegungszustand ist, den Unter-Aufenthaltsbereich zu berichten, wenn der Bewegungszustand der Durchschnittsgeschwindigkeitsbewegungszustand ist, und den Unter-Unter-Aufenthaltsbereich zu berichten, wenn der Bewegungszustand der Normalgeschwindigkeitsbewegungszustand ist;
oder das Benutzerendgerät ausgebildet ist, den Aufenthaltsbereich zu berichten, wenn der Bewegungszustand der Hochgeschwindigkeitsbewegungszustand oder der Durchschnittsgeschwindigkeitsbewegungszustand ist, und den Unter-Aufenthaltsbereich zu berichten, wenn der Bewegungszustand der Normalgeschwindigkeitsbewegungszustand ist;
oder das Benutzerendgerät ausgebildet ist, den Aufenthaltsbereich zu berichten, wenn der Bewegungszustand der Hochgeschwindigkeitsbewegungszustand ist, und den Unter-Aufenthaltsbereich zu berichten, wenn der Bewegungszustand der Durchschnittsgeschwindigkeitsbewegungszustand oder der Normalgeschwindigkeitsbewegungszustand ist,
wobei der Bewegungszustand in dem Fall des UMTS durch Zählen der Zahl der Zellneuauswahlzeit für das Benutzerendgerät bestimmt wird, bezugnehmend auf einen Steuerparameter der Netzkonfiguration und Vergleichen gemäß einer bestimmten Regel; anderenfalls, unter Verwendung des Global Positioning Systems oder der Frequenz der Aufenthaltsaktualisierung des Benutzerendgeräts.

## Revendications

1. Procédé de radiomessagerie d'un équipement d'utilisateur comprenant : fixer des zones de localisation ayant des niveaux différents et fixer une relation correspondante entre un état en mouvement d'un équipement d'utilisateur et le niveau de la zone de localisation par un réseau de radiomessagerie ; comprenant en outre :
rapporter de l'information de la zone de localisation avec le niveau correspondant à un côté de réseau par l'équipement d'utilisateur suivant l'état en mouvement en cours de l'équipement de l'utilisateur ;
faire débuter une radiomessagerie pour l'équipement de l'utilisateur par le côté de réseau dans la zone de localisation avec le niveau correspondant rapporté par l'équipement de l'utilisateur,
dans lequel le stade de fixation de zones de localisation avec des niveaux différents comprend : fixer une zone de sous-localisation plus petite qu'une zone de couverture de la zone de localisation, et/ou fixer une zone de sous-sous-localisation plus petite qu'une zone de couverture d'une zone de sous-localisation, une unité minimum des zones de localisation avec des niveaux différents étant une cellule,
**caractérisé en ce que** la zone de sous-localisation est indépendante de la zone de localisation,
et/ou la zone de sous-sous-localisation est indépendante de la zone de sous-localisation.

2. Procédé suivant la revendication 1, comprenant en outre : fixer une condition de déclenchement d'une mise à jour de localisation ; lorsque la condition de déclenchement de la mise à jour de la localisation est satisfaite, rapporter l'information de la zone de localisation avec le niveau correspondant par l'équipement de l'utilisateur suivant le niveau de l'état en mouvement en cours.

3. Procédé suivant la revendication 2, dans lequel la condition de déclenchement de la mise à jour de la localisation comprend : mettre en service l'équipement de l'utilisateur ou arriver à un cycle de mise à jour de la localisation fixé à l'avance, ou passer sur la zone de localisation avec le niveau correspondant à l'état en mouvement en cours par l'équipement de l'utilisateur.

4. Procédé suivant la revendication 1, dans lequel l'état en mouvement comprend : un état en mouvement à grande vitesse et un état en mouvement à vitesse normale ; ou un état en mouvement à grande vitesse, un état en mouvement à vitesse moyenne et un état en mouvement à vitesse normale ;
le stade de fixation de la relation correspondante entre l'état en mouvement et le niveau de la zone de localisation rapportée par l'équipement de l'utilisateur comprend en outre :
rapporter la zone de localisation lorsque l'état en mouvement est l'état en mouvement à grande vitesse, et rapporter la zone de sous-localisation lorsque l'état en mouvement est l'état en mouvement à vitesse normale ;
ou rapporter la zone de localisation lorsque l'état en mouvement est l'état en mouvement à grande vitesse, rapporter la zone de sous-localisation lorsque l'état en mouvement est l'état en mouvement à vitesse moyenne et rapporter la zone de sous-sous-localisation lorsque l'état en mouvement est l'état en mouvement à vitesse normale ;
ou, rapporter la zone de localisation lorsque l'état en mouvement est l'état en mouvement à grande vitesse ou l'état en mouvement à vitesse moyenne et rapporter la zone de sous-localisation lorsque l'état en mouvement est l'état en mouvement à vitesse normale ;
ou rapporter la zone de localisation lorsque l'état en mouvement est l'état en mouvement à grande vitesse, et rapporter la zone de sous-localisation lorsque l'état en mouvement est l'état en mouvement à vitesse moyenne ou l'état en mouvement à vitesse normale,
dans lequel l'état en mouvement est déterminé en comptant le nombre de fois de re-sélection de cellules pour l'équipement de l'utilisateur, en se reportant à un paramètre de commande d'une configuration du réseau et en comparant suivant une certaine règle, dans le cas de Universal Mobile Telecommunication System UMTS ; sinon, en utilisant Global Positioning System ou la fréquence de mise à jour de localisation de l'équipement de l'utilisateur.

5. Equipement d'utilisateur comprenant : une unité de fixation et une unité de rapport ;
l'unité (70) de fixation étant configurée pour fixer des zones de localisation avec des niveaux différents, et pour fixer une relation correspondante entre un état en mouvement de l'équipement de l'utilisateur et le niveau de la zone de localisation ; et
l'unité (71) de rapport est placée dans l'équipement de l'utilisateur et est configurée pour rapporter de l'information sur la zone de localisation avec le niveau correspondant à un côté de réseau suivant l'état en mouvement en cours de l'équipement de l'utilisateur,
dans lequel l'unité (70) de fixation est configurée en outre pour fixer une zone de sous-localisation plus petite qu'une zone de couverture de la zone de localisation, et/ou pour fixer une zone de sous-sous-localisation plus petite qu'une zone de couverture d'une zone de sous-localisation, une unité minimum des zones de localisation ayant des niveaux différents étant une cellule,
**caractérisé en ce que** la zone de sous-localisation est indépendante de la zone de localisation,
et/ou la zone de sous-sous-localisation est indépendante de la zone de sous-localisation.

6. Equipement de l'utilisateur suivant la revendication 5, dans lequel l'unité (70) de fixation est configurée en outre pour fixer une condition de déclenchement d'une mise à jour de la localisation ; lorsque la condition de déclenchement de la mise à jour de la localisation est satisfaite, l'unité (71) de rapport est configurée pour rapporter l'information de la zone de localisation avec le niveau correspondant suivant l'état en mouvement en cours de l'équipement de l'utilisateur.

7. Equipement de l'utilisateur suivant la revendication 6, dans lequel la condition de déclenchement de la mise à jour de la localisation comprend : mettre en service l'équipement de l'utilisateur ou arriver à un cycle de mise à jour de la localisation fixé à l'avance, ou passer sur la zone de localisation avec le niveau correspondant à l'état en mouvement en cours par l'équipement de l'utilisateur.

8. Equipement de l'utilisateur suivant la revendication 5, dans lequel l'état en mouvement comprend : un état en mouvement à grande vitesse et un état en mouvement à vitesse normale ; ou un état en mouvement à grande vitesse, un état en mouvement à vitesse moyenne et un état en mouvement à vitesse normale ;
l'unité (71) de rapport est configurée pour rapporter la zone de localisation lorsque l'état en mouvement est l'état en mouvement à grande vitesse et pour rapporter la zone de sous-localisation lorsque l'état en mouvement est l'état en mouvement à vitesse normale ;
ou l'unité (70) de rapport est configurée pour rapporter la zone de localisation lorsque l'état en mouvement est l'état en mouvement à grande vitesse, pour rapporter la zone de sous-localisation lorsque l'état en mouvement est l'état en mouvement à vitesse moyenne et pour rapporter la zone de sous-sous-localisation lorsque l'état en mouvement est l'état en mouvement à vitesse normale ;
ou l'unité (70) de rapport est configurée pour rapporter la zone de localisation lorsque l'état en mouvement est l'état en mouvement à grande vitesse ou l'état en mouvement à vitesse moyenne et pour rapporter la zone de sous-localisation lorsque l'état en mouvement est l'état en mouvement à vitesse normale ;
ou, l'unité (70) de rapport est configurée pour rapporter la zone de localisation lorsque l'état en mouvement est l'état en mouvement à grande vitesse et pour rapporter la zone de sous-localisation lorsque l'état en mouvement est l'état en mouvement à vitesse moyenne ou l'état en mouvement à vitesse normale,
dans lequel l'état en mouvement est déterminé en comptant le nombre de fois de re-sélection de cellules pour l'équipement de l'utilisateur, en se rapportant à un paramètre de commande d'une configuration du réseau et en comparant suivant une certaine règle, dans le cas de Universal Mobile Telecommunication System UMTS ; sinon, en utilisant Global Positioning System ou la fréquence de mise à jour de localisation de l'équipement de l'utilisateur.

9. Réseau de radiomessagerie comprenant : une unité (90) de fixation, une unité (91) de réception et une unité (92) de radiomessagerie ;
l'unité (90) de fixation est configurée pour fixer des zones de localisation avec des niveaux différents et pour fixer une relation correspondante entre un état en mouvement d'un équipement d'utilisateur et le niveau de la zone de localisation ;
l'unité (91) de réception est configurée pour recevoir de l'information de la zone de localisation avec le niveau correspondant à l'état en mouvement en cours de l'équipement de l'utilisateur, qui est rapporté par l'équipement de l'utilisateur ; et
l'unité (92) de radiomessagerie est configurée pour faire débuter une radiomessagerie pour l'équipement de l'utilisateur dans la zone de localisation rapportée par l'équipement de l'utilisateur,
dans lequel l'unité (90) de fixation est configurée en outre pour fixer une zone de sous-localisation plus petite qu'une zone de couverture de la zone de localisation et/ou pour fixer une zone de sous-sous-localisation plus petite qu'une zone de couverture de la zone de sous-localisation, une unité minimum des zones de localisation ayant des niveaux différents étant une cellule,
**caractérisé en ce que** la zone de sous-localisation est indépendante de la zone de localisation,
et/ou la zone de sous-sous-localisation est indépendante de la zone de sous-localisation.

10. Réseau de radiomessagerie suivant la revendication 9, dans lequel l'état en mouvement comprend : un état en mouvement à grande vitesse et un état en mouvement à vitesse normale ; ou un état en mouvement à grande vitesse, un état en mouvement à vitesse moyenne et un état en mouvement à vitesse normale ;
l'équipement de l'utilisateur est configuré pour rapporter la zone de localisation lorsque l'état en mouvement est l'état en mouvement à grande vitesse et pour rapporter la zone de sous-localisation lorsque l'état en mouvement est l'état en mouvement à vitesse normale ;
ou, l'équipement de l'utilisateur est configuré pour rapporter la zone de localisation lorsque l'état en mouvement est l'état en mouvement à grande vitesse, pour rapporter la zone de sous-localisation lorsque l'état en mouvement est l'état en mouvement à vitesse moyenne et pour rapporter la zone de sous-sous-localisation lorsque l'état en mouvement est l'état en mouvement à vitesse normale ;
ou, l'équipement de l'utilisateur est configuré pour rapporter la zone de localisation lorsque l'état en mouvement est l'état en mouvement à grande vitesse ou l'état en mouvement à vitesse moyenne et pour rapporter la zone de sous-localisation lorsque l'état en mouvement est l'état en mouvement à vitesse normale ;
ou, l'équipement de l'utilisateur est configuré pour rapporter la zone de localisation lorsque l'état en mouvement est l'état en mouvement à grande vitesse et pour rapporter la zone de sous-localisation lorsque l'état en mouvement est l'état en mouvement à vitesse moyenne ou l'état en mouvement à vitesse normale,
dans lequel, l'état en mouvement est déterminé en comptant le nombre de fois de re-sélection de cellules pour l'équipement de l'utilisateur, en se rapportant à un paramètre de commande d'une configuration du réseau et en comparant suivant une certaine règle, dans le cas de Universal Mobile Telecommunication System UMTS ; sinon, en utilisant Global Positioning System ou la fréquence de mise à jour de localisation de l'équipement de l'utilisateur.
